# EUROPEAN PATENT APPLICATION

(11) **EP 1 640 378 A1**
(43) Date of publication of application: **29.03.2006**
(21) Application number: 05252187.9
(22) Date of filing: 07.04.2005
(51) Int. Cl.: C07F 17/00, C07F 7/18, C08F 10/00

(54) **Metallocene catalysts comprising monocyclic multisiloxy substituted cyclopentadienyl group(s) for the polymerisation of olefins**

(30) Priority: 17.09.2004 GB 0419851
(71) Applicant: Borealis Technology Oy, 06101 Porvoo (FI)
(72) Inventor: Andell, Ove Abo Akademi University, 20500 Abo (FI); Penninkangas, Antti Abo Akademi University, 20500 Abo (FI); Shaozhong, Ge Abo Akademi University, 20500 Abo (FI)
(74) Representative: Campbell, Neil Boyd

(57) **Abstract**

A metallocene procatalyst compound comprising a group 3 to 7 transition metal and a multisiloxy substituted cyclopentadienyl ligand or a multisiloxy substituted bicyclic cyclopentadienyl ligand with the proviso that if a siloxy group is present in the 6 membered ring of an indenyl ligand, then at least two siloxy substituents must be present on adjacent carbon atoms forming the bicyclic ring.

## Description

This invention relates to catalysts for olefin polymerisation, in particular to catalyst compounds containing metals complexed by multisiloxy substituted cyclopentadienyl or indenyl ligands, and their use in olefin polymerisation.

In olefin polymerization, it has long been known to use as a catalyst system the combination of a metallocene procatalyst and a co-catalyst, e.g. an aluminoxane cocatalyst.

More recently, chemists have appreciated the potential benefits in employing siloxy substitution on metallocenes. For example, WO01/53362 describes various monosubstituted siloxy derivatives which have surprising activity when used in combination with non aluminoxane cocatalysts.

WO03/000744 describes indenyl metallocenes substituted in the 4,5,6 or 7 position by siloxy substituents. Indenyl metallocenes monosubstituted in the 1,2 or 3 positions are described in WO97/28170. WO03/010208 describes metallocenes monosubstituted by siloxy groups containing an olefinic residue.

The chemist is however constantly searching for new metallocenes which will give rise to polymers of desirable properties, e.g. high molecular weight. The chemist also strives for high activity catalysts and catalysts which exhibit advantageous comonomer incorporation properties.

We have now surprisingly found that metallocenes in which the metal is complexed by a multisiloxy substituted cyclopentadienyl or indenyl ligand have surprisingly high activity, and give rise to polymers with high MW. The catalysts also exhibit high comonomer incorporation.

Thus, viewed from one aspect the invention provides a metallocene procatalyst compound comprising a group 3 to 7 transition metal and a multisiloxy substituted cyclopentadienyl ligand or a multisiloxy substituted bicyclic cyclopentadienyl ligand with the proviso that if a siloxy group is present in the 6 membered ring of an indenyl ligand, then at least two siloxy substituents must be present on adjacent carbon atoms forming the bicyclic ring.

By multisiloxy substituted is meant that at least two siloxy substituents are present. By bicyclic cyclopentadienyl group is meant a cyclopentadienyl group fused with a further ring of 4 to 6 carbon atoms, e.g. an indenyl or tetrahydroindenyl ring.

Viewed from a further aspect the invention provides an olefin polymerisation catalyst system comprising (i) a metallocene compound comprising a group 3 to 7 transition metal and a multisiloxy substituted cyclopentadienyl ligand or a multisiloxy substituted bicyclic cyclopentadienyl ligand with the proviso that if a siloxy group is present in the 6 membered ring of an indenyl ligand, then at least two siloxy substituents must be present on adjacent carbon atoms forming the bicyclic ring and (ii) a co-catalyst.

Viewed from a still further aspect the invention provides a process for olefin polymerisation comprising polymerising an olefin in the presence of olefin polymerisation catalyst system as hereinbefore described.

Viewed from a further aspect the invention provides the use of an olefin polymerisation catalyst system as hereinbefore defined in olefin polymerization, especially ethylene or propylene, more especially ethylene, polymerisation or copolymerisation.

Viewed from a yet further aspect the invention provides an olefin polymer produced by a polymerisation catalysed by a olefin polymerisation catalyst system as hereinbefore described.

The multisiloxy substituted cyclopentadienyl ligand of use in the invention may be of formula (I) 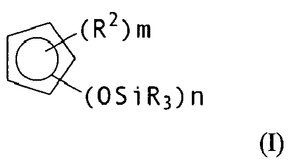 wherein each R, which may be the same or different, is a C₁₋₁₆ hydrocarbyl group, preferably a C₁₋₁₂ hydrocarbyl group, e. g. a C₁₋₈ alkyl or C₂₋₈ alkenyl group;
each R², which may be the same or different, is a ring substituent which does not form a bond to a metal complexed by the cyclopentadienyl ring;
n is an integer from 2 to 5, e.g. 3 or 4,
m is an integer from 0 to 3, the total of n and m not exceeding 5.

The substituents can be present on any position on the ring however it is preferred if at least two siloxy substituents are present on adjacent carbon atoms.

Preferably the subscript n is 2. The subscript m is preferably 0 or 1.

Alternatively, the metallocene procatalyst may be a multisiloxy substituted bicyclic cyclopentadienyl ligand. A suitable ligand is therefore of formula (II) 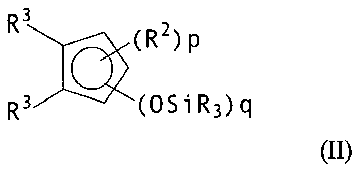 wherein R and R² are as hereinbefore defined; the two R³ groups taken together form a fused ring having 4 to 6 carbon atoms (e.g. indenyl or tetrahydroindenyl);
q is an integer from 2 to 7 (e.g. 3 or 4); and
p is an integer from 0 to 5; the total p+q not exceeding 7; with the proviso that if an OSiR₃ group is present in the 6 membered ring of an indenyl ligand, then at least two OSiR₃ groups must be present on adjacent carbon atoms.

Preferably, the subscript q is 2. Also preferably, p is 0 or 1.

The fused ring formed by the R³ substituents may be aromatic or non-aromatic. Preferably, the R³ substituents together with the cyclopentadienyl ring form an indenyl ring.

In a ligand comprising a second fused ring, e.g. an indenyl ligand, the substituents can be present either in the 5 membered cyclopentadienyl ring or in the fused ring (e.g. a 6 membered ring). It is, however, also within the scope of the invention for siloxy substituents to be present in the fused ring (e.g. a six membered ring) or present in both rings.

In the case of an indenyl ligand, it is preferred if the siloxy substituents are found in the 5 membered ring, i.e. the ring is siloxy substituted at least in the 1,2, 1,3 or 2,3 positions, more preferably at least in the 1,2 or 2,3 positions. When the 6-membered ring of a indenyl ligand carries a siloxy substituent, it is required that somewhere in the ligand there are two siloxy substituents on adjacent carbon atoms. Accordingly, the following siloxy substitution patterns are therefore also of interest on indenyl ligands: 4,5; 5,6; 6,7; 1,2,5; 1,2,6; 1,2,7; 2,3,5; 2,3,6; 2,3,7.

In a preferred embodiment of the invention, the metallocene procatalyst will comprise two multisiloxy substituted ligands, e.g. two ligands of formula (I) or two ligands of formula (II). Especially preferably, the two ligands will be identical. Where two such ligands are present, one substituent on each ring may be taken together to form a bridge between the ligands, e.g. a 1 to 3 atom bridge such as an ethylene or dimethylsilyl bridge. Various bridges have been proposed in the art and will be known to the skilled chemist. Typically, bridges are formed from carbon and/or silicon atoms, there being one or two atoms forming the link between siloxy ligands.

If present, the bridge between ligands should preferably be between the 1-positions on the rings.

Besides the multisiloxy-substituted ligand, the group 3 to 7 metal in the procatalyst of the invention may be coordinated by sigma ligands as is known in the art, e.g. coordinated by 2 or 3 sigma ligands. Such ligands may be hydrogen atoms, C₁₋₁₂ hydrocarbyl groups (such as C₁₋₁₂ alkyl, C₂₋₁₂ alkenyl or C₂₋₁₂ alkynyl groups optionally substituted by fluorine and/or aryl (e.g. phenyl) groups), by silane groups (e.g . triC₁₋₁₆₋alkylsilyl), by halogen atoms (e.g. chlorine), by amine (e.g. NMe₂ or by other sigma-ligands known for use in metallocene (pro)catalysts.

Preferably, the sigma ligand is a halogen (especially chlorine), amino (especially dimethylamino), C₁₋₁₂ alkyl (especially methyl), benzyl or trialkylsilyl (especially trimethylsilyl) ligand. Moreover, it is preferred if all sigma ligands present are identical.

Thus, the metallocene procatalyst of the invention may comprise a ligand of formula (I) or (II) and three sigma ligands. Alternatively, the procatalyst may comprise two multisiloxy substituted ligands and two sigma ligands.

The metallocene procatalyst of the invention may conveniently be a compound of formula (III) 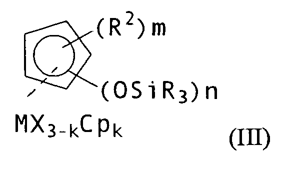 wherein the metal M is a group 3 to 7 transition metal; each X is a sigma ligand; R, R², m and n are as hereinbefore defined, k is 0 or 1; and Cp is an optionally substituted cyclopentadienyl ligand or bicyclic cyclopentadienyl ligand.

Cp, where present, may be unsubstituted or may comprise one or more R² substituents or one or more OSiR₃ substituents. Preferably however, Cp is a further ligand of formula (I). Thus, a further preferred metallocene of the invention is of formula (IIIa). 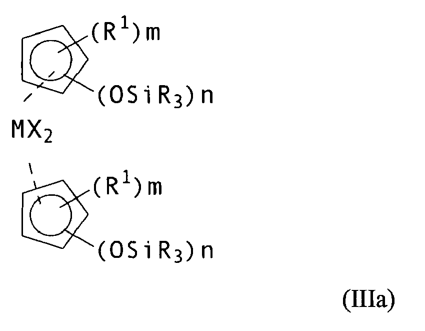 wherein the metal M is a group 3 to 7 transition metal; each X is a sigma ligand; R, m and n are as hereinbefore defined and each R¹, which may be the same or different, is a ring substituent which does not form a bond to a metal complexed by the cyclopentadienyl ring (e.g . it may be a C₁₋₁₆ hydrocarbyl group, tri- C₁₋₁₆₋hydrocarbylsilyl group) or one R¹ group on each ring can be taken together to form a bridge.

Alternatively, the metallocene procatalyst of the invention may conveniently be a compound of formula (IV) 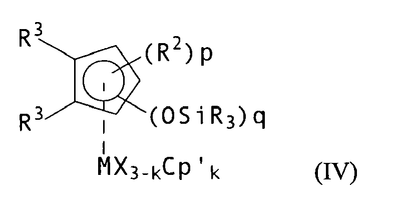 wherein the metal M is a group 3 to 7 transition metal; each X is a sigma ligand; R, R², R³, k, p and q are as hereinbefore defined and Cp' is an optionally substituted cylopentadienyl ligand or bicyclic cyclopentadienyl ligand (e.g. an indenyl or tetrahydroindenyl ring) with the proviso that if an OSiR₃ group is present in the 6 membered ring of an indenyl ligand, then at least two OSiR₃ groups must be present on adjacent carbon atoms.

Cp', where present, may be unsubstituted and is preferably indenyl. It may comprise one or more R² substituents or one or more OSiR₃ substituents. Preferably however, Cp' is a further ligand of formula (II). Thus, a further preferred metallocene of the invention is of formula (IVa). 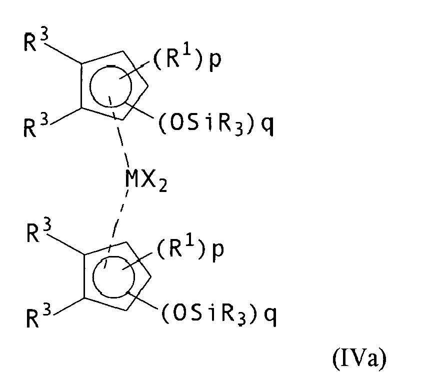 wherein the metal M is a group 3 to 7 transition metal; each X is a sigma ligand; R, R³, p and q are as hereinbefore defined and each R¹, which may be the same or different, is a ring substituent which does not form a bond to a metal complexed by the cyclopentadienyl ring (e.g. it may be a C₁₋₁₆ hydrocarbyl group, tri-C₁₋₁₆₋hydrocarbylsilyl group) or one R¹ group on each ring can be taken together to form a bridge with the proviso that if an OSiR₃ group is present in the 6 membered ring of an indenyl ligand, then at least two OSiR₃ groups must be present on adjacent carbon atoms.

The metal M is preferably a group 4 to 6 transition metal, e.g. a metal selected from Ti, Zr, Hf, V, Nb, Ta, Cr, Mo and W. However the metal is preferably Cr, Ti, Zr or Hf, particularly Ti, Zr or Hf, especially Zr.

In the ligands of the invention, each R group is preferably a C₁₋₈ alkyl or C₂₋₈ alkenyl group, e.g. a C₁₋₆ alkyl group such as a methyl, ethyl, isopropyl, tertbutyl or n-octenyl group. Examples of suitable R₃SiO groups in the metallocene procatalysts of the invention therefore include dimethyltertbutylsiloxy, triisopropylsiloxy, dimethyloctenylsiloxy, triethylsiloxy, dimethylisopropylsiloxy and trimethylsiloxy.

An especially preferred siloxy substituent is trimethylsiloxy.

R¹ or R², if present, is preferably a C₁₋₈ alkyl group (e.g. a methyl group) or a triC₁₋₈-alkylsilyl group, especially a SiMe₃ group.

Thus, especially preferred ligands for use in the procatalysts of the invention are

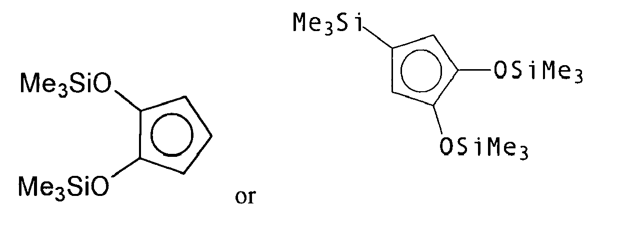

The multisiloxy ligands used according to the invention have proven challenging to synthesize although the inventors have been able to devise a strategy for their preparation as described below. The processes for the preparation of the ligands are therefore inventive. Multisiloxy substituted cyclopentadienyl/indenyl ligands can be prepared from a corresponding siloxycyclopentadiene/indene with an appropriate base, e.g. an organolithium compound, such as methyllithium or butyllithium. Particular bases of use in this regard include t-BuLi, n-BuLi, lithium diisopropylamide, t-BuOK, trialkylamines, dialkyl-magnesium, alkylmagnesium chloride, alkyl CuLi and dialkyl zinc which may be used in conjunction with a suitable solvent. If necessary, a donor such as dimethoxyethane may be added to the reaction medium containing the siloxycompound prior to addition of the base.

The ligand can be metallated conventionally, e.g. by reaction with a halide of the metal M, preferably in an organic solvent, e.g. a hydrocarbon or a hydrocarbon/ether mixture. Bridged siloxy-cyclopentadienes/indenes may be constructed by reacting a siloxy-monocyclopentadiene/indene with a bridging agent (e.g. SiMe₂Cl₂).

Sigma ligands other than chlorine may be introduced by displacement of chlorine from metal chloride by reaction with appropriate nucleophilic reagent (e.g. methyl lithium) or using, instead of a metal halide, a reagent such as tetrakisdimethylamidotitanium or metal compounds with mixed chloro and dimethylamido ligands.

The siloxy substituents can be introduced stepwise. For example, 2-cyclopentadione can be reacted with a trialkylsilyl chloride to form a 2-trialkylsilyloxycyclopent-2-enone, as shown in the following scheme (with reference to trimethylsilylchloride).

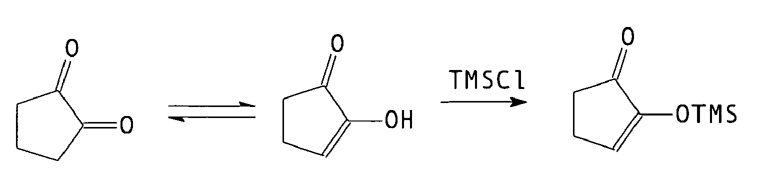

Reaction of such a compound with a strong base and further trialkylsilyl compound yields a bissiloxy substituted cyclopentadiene species. Further substituents can be introduced onto the cyclopentadiene ring by deprotonation thereof and reaction with appropriate electrophiles, e.g. trialkylsilyl halides such as SiMe₃Cl.

The same synthetic principles apply to the synthesis of bissiloxy substituted tetrahydroindenyl species.

This method for the formation of bis-siloxy substituted metallocenes is new and forms a further aspect of the invention. Thus, viewed from a further aspect the invention provides a process for the preparation of siloxy substituted metallocene procatalyst comprising reacting a compound of formula (VI) 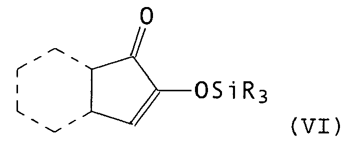 wherein R is as hereinbefore defined and the dotted lines represent the optional presence of a saturated 6- membered ring (i.e. to form a tetrahydroindenyl species);
with a compound of formula R₃SiZ, wherein Z represents a leaving group, in the presence of a base, e.g. LiBr, to form a compound of formula (V) 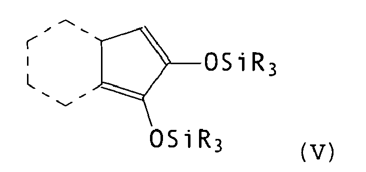 and reacting the compound of formula (V) with a metal chloride.

Suitable leaving groups Z include halogens, (especially chlorine) or hydrogen.

A synthesis of 2-cyclopentadione is described in Tomari, Agri Biol Chem 1980, 44(9), 2135-2138. Conversion of this compound to a compound of formula (VI) is readily achieved e.g. by reaction with R₃SiCl in base.

The compound of formula (V) can be further functionalised to carry other substituents, e.g. substituents of formula R₃Si-. This can be achieved readily using base, e.g. LDA and a trialkylsilyl chloride. The resulting compounds are new and form a further aspect of the invention.

Thus, viewed from a still yet further aspect, the invention provides a compound of formula (VII) 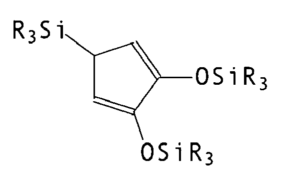 wherein R is as hereinbefore defined. Preferences for R are as hereinbefore described.

Where a bissiloxy substituted indenyl ligand is desired, the starting material may be a compound of formula 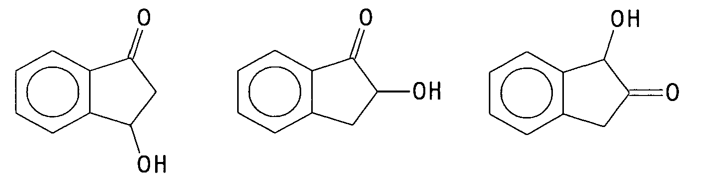 which can be reacted with a compound of formula R₃SiZ wherein Z is as hereinbefore defined (e.g. TMSCl) in base as described above. This allows direct formation of a compound 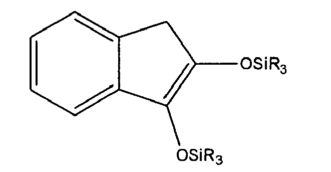 which can be reacted with a metal chloride to complete formation of the metallocene procatalyst.

Viewed from another aspect therefore the invention provides a process for the preparation of a multisiloxy substituted metallocene procatalyst comprising reacting a compound of formula (VIIIa/b/c) 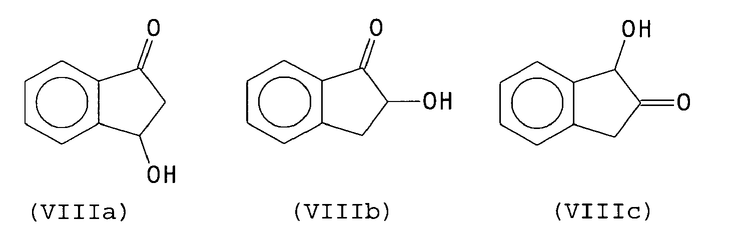 with a compound of formula R₃SiZ, wherein R is as hereinbefore defined and Z represents a leaving group, in the presence of a base, e.g. LiBr, to form a compound of formula (IX) 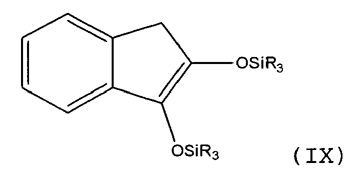 and reacting the compound of formula (IX) with a metal chloride.

As mentioned above, the olefin polymerisation catalyst system of the invention comprises (i) a multisiloxysubstituted metallocene procatalyst and (ii) a cocatalyst compound (or the reaction product thereof). The cocatalyst may be an aluminium alkyl compound, e.g. an aluminium trialkyl (eg triethylaluminium (TEA)) or an aluminium dialkyl halide (eg diethyl aluminium chloride (DEAC)), however it is preferably an alumoxane, particularly MAO, TIBAO (tetraisobutylalumoxane) or HIBAO (hexaisobutylalumoxane). Alternatively however certain known boron cocatalysts could be used.

The metallocene procatalyst and cocatalyst may be introduced into the polymerization reactor separately or together or, more preferably they are pre-reacted and their reaction product is introduced into the polymerization reactor.

If desired the procatalyst, procatalyst/cocatalyst mixture or a procatalyst/cocatalyst reaction product may be used in unsupported form, i.e. metallocene and MAO can be precipitated without an actual carrier material and used as such. However the metallocene procatalyst or its reaction product with the cocatalyst is preferably introduced into the polymerization reactor in supported form, eg impregnated into a porous particulate support.

The particulate support material used is preferably an organic or inorganic material, e.g. a polymer (such as for example polyethylene, polypropylene, an ethylenepropylene copolymer, another polyolefin or polystyrene or a combination thereof). However, the support is especially preferably a metal or pseudo metal oxide such as silica, alumina or zirconia or a mixed oxide such as silica-alumina, in particular silica, alumina or silica-alumina. Particularly preferably, the support material is acidic.

Especially preferably the support is a porous material so that the metallocene may be loaded into the pores of the support, e.g. using a process analogous to those described in WO94/14856 (Mobil), WO95/12622 (Borealis) and WO96/00243 (Exxon). The particle size is not critical but is preferably in the range 5 to 200 µm, more preferably 20 to 80 µm.

Before loading, the particulate support material is preferably calcined, ie heat treated, preferably under a non-reactive gas such as nitrogen. This treatment is preferably at a temperature in excess of 100°C, more preferably carried out at a temperature of 200°C or higher, e.g. 200-800°C, particularly about 300°C. The calcination treatment is preferably effected for several hours, e.g. 2 to 30 hours, more preferably about 10 hours.

The support may be treated with an alkylating agent before being loaded with the metallocene. Treatment with the alkylating agent may be effected using an alkylating agent in a gas or liquid phase, e.g. in an organic solvent for the alkylating agent. The alkylating agent may be any agent capable of introducing alkyl groups, preferably C₁₋₆ alkyl groups and most especially preferably methyl groups. Such agents are well known in the field of synthetic organic chemistry. Preferably the alkylating agent is an organometallic compound, especially an organoaluminium compound (such as trimethylaluminium (TMA), dimethyl aluminium chloride, triethylaluminium) or a compound such as methyl lithium, dimethyl magnesium, triethylboron, etc.

Where an organoaluminium alkylating agent is used, this is preferably used in a quantity sufficient to provide a loading of at least 0.1 mmol Al/g carrier, especially at least 0.5 mmol Al/g, more especially at least 0.7 mmol Al/g, more preferably at least 1.4 mmol Al/g carrier, and still more preferably 2 to 3 mmol Al/g carrier. Where the surface area of the carrier is particularly high, lower aluminium loadings may be used. Thus for example particularly preferred aluminium loadings with a surface area of 300-400 m²/g carrier may range from 0.5 to 3 mmol Al/g carrier while at surface areas of 700-800 m²/g carrier the particularly preferred range will be lower.

Following treatment of the support material with the alkylating agent, the support is preferably removed from the treatment fluid and any excess treatment fluid is allowed to drain off.

The optionally alkylated support material is loaded with the procatalyst, preferably using a solution of the procatalyst in an organic solvent therefor, e.g. as described in the patent publications referred to above. Preferably, the volume of procatalyst solution used is from 50 to 500% of the pore volume of the carrier, more especially preferably 80 to 120%. The concentration of procatalyst compound in the solution used can vary from dilute to saturated depending on the amount of metallocene active sites that it is desired be loaded into the carrier pores.

The active metal (ie. the metal of the procatalyst) is preferably loaded onto the support material at from 0.1 to 40, preferably 0.5 to 3.0%, especially 1.0 to 2.0%, by weight metal relative to the dry weight of the support material.

After loading of the procatalyst onto the support material, the loaded support may be recovered for use in olefin polymerization, e.g. by separation of any excess procatalyst solution and if desired drying of the loaded support, optionally at elevated temperatures, e.g. 25 to 80°C.

Alternatively, a cocatalyst, e.g. an alumoxane or an ionic catalyst activator (such as a boron or aluminium compound, especially a fluoroborate) may also be mixed with or loaded onto the catalyst support material. This may be done subsequently or more preferably simultaneously to loading of the procatalyst, for example by including the cocatalyst in the solution of the procatalyst or, by contacting the procatalyst loaded support material with a solution of the cocatalyst or catalyst activator, e.g. a solution in an organic solvent. Alternatively however any such further material may be added to the procatalyst loaded support material in the polymerization reactor shortly before dosing of the catalyst material into the reactor.

Where an alumoxane cocatalyst is used, then for an unsupported catalyst the aluminium:metallocene metal (M) molar ratio is conveniently 2:1 to 10000:1, preferably 50:1 to 1000:1. Where the catalyst is supported the A1:M molar ratio is conveniently 2:1 to 10000:1 preferably 50:1 to 400:1. Where the further material is loaded onto the procatalyst loaded support material, the support may be recovered and if desired dried before use in olefin polymerization.

The olefin polymerized in the method of the invention is preferably ethylene or an alpha-olefin or a mixture of ethylene and an alpha-olefin or a mixture of alpha olefins, for example C₂₋₂₀ olefins, e.g. ethylene, propene, n-but-1-ene, n-hex-1-ene, 4-methyl-pent-1-ene, n-oct-1-ene etc. The olefins polymerized in the method of the invention may include any compound which includes unsaturated polymerizable groups. Thus for example unsaturated compounds, such as C₆₋₂₀ olefins (including cyclic and polycyclic olefins (e.g. norbornene)), and polyenes, especially C₆₋₂₀ dienes, may be included in a comonomer mixture with lower olefins. Diolefins (ie. dienes) are suitably used for introducing long chain branching into the resultant polymer. Examples of such dienes include linear dienes such as 1,5-hexadiene, 1,6-heptadiene, 1,8-nonadiene, 1,9-decadiene, etc.

In general, where the polymer being produced is a homopolymer it will preferably be polyethylene or polypropylene. Where the polymer being produced is a copolymer it will likewise preferably be an ethylene or propylene copolymer with ethylene or propylene making up the major proportion (by number and more preferably by weight) of the monomer residues. Comonomers, such as C₄₋₆ alkenes, will generally be incorporated to contribute to the mechanical strength of the polymer product.

Usually metallocene catalysts yield relatively narrow molecular weight distribution polymers; however, if desired, the nature of the monomer/monomer mixture and the polymerization conditions may be changed during the polymerization process so as to produce a broad bimodal or multimodal molecular weight distribution (MWD) in the final polymer product. In such a broad MWD product, the higher molecular weight component contributes to the strength of the end product while the lower molecular weight component contributes to the processability of the product, e.g. enabling the product to be used in extrusion and blow moulding processes, for example for the preparation of tubes, pipes, containers, etc.

A multimodal MWD can be produced using a catalyst material with two or more different types of active polymerization sites, e.g. with one such site provided by the metallocene on the support and further sites being provided by further catalysts, e.g. Ziegler catalysts, other metallocenes, etc. included in the catalyst material.

Polymerization in the method of the invention may be effected in one or more, e.g. 1, 2 or 3, polymerization reactors, using conventional polymerization techniques, e.g. gas phase, solution phase, slurry or bulk polymerization.

In general, a combination of slurry (or bulk) and at least one gas phase reactor is often preferred, particularly with the reactor order being slurry (or bulk) then one or more gas phase.

For slurry reactors, the reaction temperature will generally be in the range 60 to 110 °C (e.g. 85-110 °C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100 °C. In such reactors, polymerization may if desired be effected under supercritical conditions.

For gas phase reactors, the reaction temperature used will generally be in the range 60 to 115 °C (e.g. 70 to 110 °C), the reactor pressure will generally be in the range 10 to 25 bar, and the residence time will generally be 1 to 8 hours. The gas used will commonly be a non-reactive gas such as nitrogen together with monomer (e.g. ethylene).

For solution phase reactors, the reaction temperature used will generally be in the range 130 to 270 °C, the reactor pressure will generally be in the range 20 to 400 bar and the residence time will generally be in the range 0.005 to 1 hour. The solvent used will commonly be a hydrocarbon with a boiling point in the range 80-200 °C.

Generally the quantity of catalyst used will depend upon the nature of the catalyst, the reactor types and conditions and the properties desired for the polymer product. Conventional catalyst quantities, such as described in the publications referred to herein, may be used.

All publications referred to herein are hereby incorporated by reference.

The invention will now be illustrated further by reference to the following non-limiting Examples.

### Examples

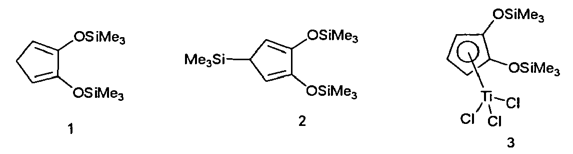

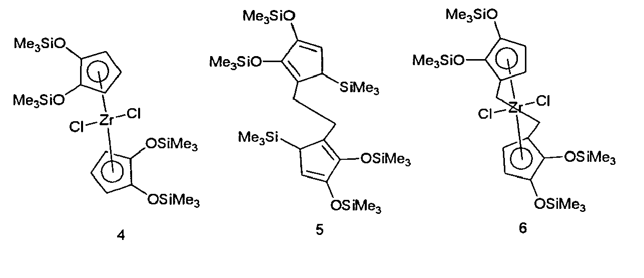

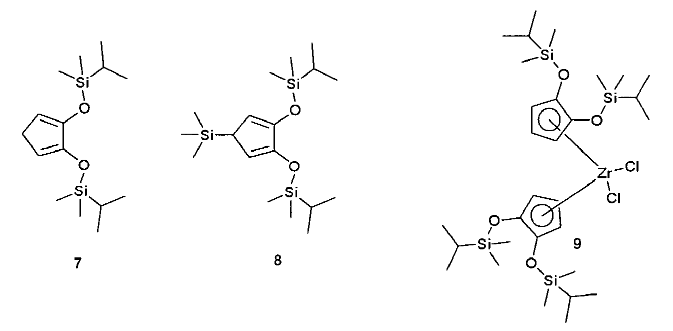

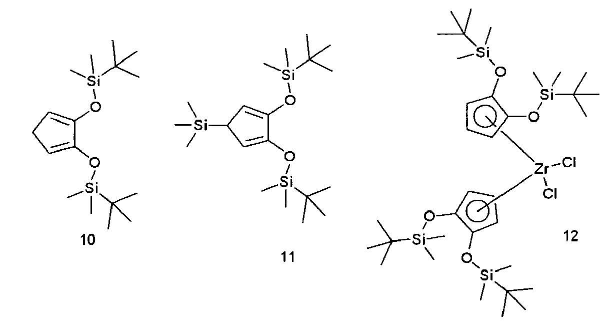

### Example 1a: Synthesis of 2,3-bis-trimethylsilanyloxy-cyclopenta-1,3-diene (1)

To a 250-ml three-necked flask equipped with a water condenser and a 100-ml dropping funnel, LiBr (20.56 g, 236.7 mmol) was added and the whole system was flame-dried under vacuum. After cooling down to the room temperature under argon, 60 ml of dry THF was added by syringe. When LiBr dissolved in THF completely, the flask was put into ethanol bath pre-cooled to -15°C. After stirring for 30 min, 2-trimethylsilanyloxy-cyclopent-2-enone (10.79 g, 63.4 mmol) (having been prepared as disclosed in the literature [1,2]) and trimethylchlorosilane (10.37 g, 95.0 mmol) were added to the flask, then triethylamine (9.61 g, 95.0 mmol) in 20 ml dry THF was added dropwise. The mixture was stirred at -15°C for another 1 h and then put in an oil bath preheated to 40°C. The mixture was allowed to react for 36 h at this temperature.

After reaction, the volatiles were removed under vacuum and residue was redissolved in 80 ml dry pentane. The solids were filtered off and the solids were washed with 3x20 ml pentane. Then the volatiles of the solution were removed under reduced pressure to offer 16.49 g residue, which was purified by distillation to give 13.10g (85%) product (1) . GC-MS: m/e=242 (M+) . 1H NMR (CDCl₃, δ) : 0.27 (s, 18H 20SiMe₃); 2.68 (t, 2H); 5.30 (t, 2H).

### Example 1b: Synthesis of 5-trimethylsilanyl-2,3-bis-trimethylsilanyloxy-cyclopenta-1,3-diene (2)

To a 250 ml flame-dried two-necked flask equipped with a water condenser, 2,3-bis-trimethylsilanyloxy-cyclopenta-1,3-diene (6.60 g, 27.2 mmol) and 60 ml dry THF were added. The solution was cooled to 0°C and then 13.65ml lithium diisopropylamide (LDA) solution (2 M in pentane/THF) was added to this stirring solution at 0°C. The reaction mixture was refluxed for about 18 h. Then diisopropylamine formed during the reaction and THF were removed under reduced pressure, leaving a dark red semisolid. 80 ml THF was added to dissolve the semisolid and the solution was cooled to 0°C. To this stirring solution, fresh distilled trimethylsilyl chloride (2.96 g, 27.2 mmol) was added quickly and then the resulting mixture was warmed to room temperature and stirred for 6 h. Volatiles were removed under reduced pressure and the residue was dissolved in 60 ml dry pentane. The resulting suspension was filtered and washed with two portions of 20 ml pentane. Pentane was removed under vacuum and some red oily liquid was resulted. Purification by distillation offered 6.10g (71%) 5-trimethylsilanyl-2,3-bis-trimethylsilanyloxy-cyclopenta-1,3-diene. GC-MS: m/e=314 (M+). 1H NMR (CDCl₃ δ): 0.03 (s, 9H SiMe₃); 0.24 (s, 18H 2OSiMe₃); 2.66 (t, 1H); 5.35 (d, 2H).

### Example 1c: Synthesis of (2,3-bis-trimethylsilanyloxy-cyclopentadienyl)-trichlorotitanium (3)

A solution of 1,2-ditrimethylsiloxyl-5-trimethylsilyl-cyclopentadiene (3.15 g 10.0 mmol) in 10 ml toluene was added in one portion to a solution of TiCl₄ (1.19 g, 10.0 mmol) in 50 ml toluene at 40°C. The resulting mixture was allowed to cool to room temperature and stirred overnight. The resulting heterogeneous mixture was passed through a Celite plug and the volatile was removed under reduced pressure to offer a dark red solid. The solid was dissolved in 40 ml of hexane/CH₂Cl₂=1:1. The solution was concentrated and the product was purified by recrystallization. 1H NMR (CD₂Cl₂, δ) : 0.35 (s, 18H 2SiMe₃) ; 6.21-6.26 (m, 3H substituted Cp).

### Example 2a: Alternative Preparation of 2,3-bis-trimethylsiloxy-cyclopenta-1,3-diene (1)

To a 250-ml three-necked flask equipped with a water condenser and a 100-ml addition funnel, 20.56 g of LiBr (236.7 mmol) was added and the whole system was flame-dried under vacuum. After cooling to room temperature under argon, 100 ml of dry THF was added to the flask. When LiBr was dissolved in THF completely, the flask was put into ethanol bath pre-cooled to -15°C. After stirring for 30 min, 10.79 g of 2-trimethylsiloxy-cyclopent-2-enone (having been prepared as disclosed in the literature [1,2]) (63.37 mmol) and 10.37 g of trimethylchlorosilane (95.45 mmol) were added to the flask, then 9.61 g of triethylamine (95.0 mmol) in 20 ml dry THF was added drop wise. After the completion of addition, the mixture was stirred at -15°C for another 1 h and then put in an oil bath preheated to 45°C. The mixture was allowed to react for 5 h at this temperature. After reaction, the volatiles were removed under vacuum and the residue was extracted with 100 ml dry pentane. The solids were filtered off and washed with three portions of 20 ml pentane. The solvent was removed under reduced pressure to afford 16.49 g of brown residue, which was purified by distillation (45-48°C, 0.15mbar) to give 13.10 g of pure product (54.03 mmol, 85.3%). GC-MS: m/e=242 (M+) . 1H NMR (250 MHz, CHLOROFORM-d δ ppm): 5.30 (t, J=2.08 Hz, 2H, CpH) 2.68 (t, J=2.08 Hz, 2H, CpH₂) 0.27 (s, 18 H, OSi(CH₃)₃).

### Example 2b: Preparation of 5-trimethylsilyl-2,3-bis-trimethylsiloxy-cyclopenta-1,3-diene (2)

Preparation was carried out as described in Example 1 b to afford the title product. GC-MS: m/e=314 (M+). 1H NMR (250 MHz, CHLOROFORM-d δ ppm): 5.35 (d, J=1.95 Hz, 2 H, CpH) 2.66 (t, J=1.95 Hz, 1 H, CpH-Si) 0.24 (s, 18 H, OSi (CH₃)₃, -0.03 (s, 9 H, Si (CH₃) ₃) .

### Example 2c: Preparation of Bis-[1,2-(trimethylsiloxy) cyclopentadienyl] zirconium dichloride (4)

A flame-dried 100-ml Schlenk flask was charged with 2.56 g of ZrCl₄ (11.0 mmol), 50 ml of dry toluene and a magnetic stirring bar and was fitted with a rubber septum. 6.28 g of 5-trimethylsilyl-2,3-bis-trimethylsiloxy-cyclopenta-1,3-diene (20.0 mmol) was added by syringe and the resultant heterogeneous mixture was stirred at room temperature for 24 h. The reaction mixture was filtered through a 3-cm plug of Celite and the filtrate was concentrated and cooled to -30°C. The target zirconocene precipitated as a white microcrystalline powder. The solvent was removed by filtering on paper and the solid was vacuum-dried to afford 4.65 g white powder (72.1 mmol, 72.1% based on the ligand). 1H NMR (600 MHz, DICHLOROMETHANE-d2 δ ppm): 5.52 (t, J=3.97 Hz, 2 H) 5.43 (d, J=3.78 Hz, 4 H) 0.20 (s, 36 H, OSi(CH₃)₃) · 13C NMR (CD₂Cl₂, δ ppm): 136.76, 100.11, 98.26, 0.00. In the EIMS spectrum, parent ions of the composition C₂₂H₄₂Si₄0₄ZrCl₂⁺ were observed in the appropriate isotope ratios at m/e 642-650.

### Example 3a: Preparation of 2,3-bis-(i-Propyl-dimethyl-siloxy)-cyclopenta-1,3-diene (7)

To a 250-ml two-necked flask equipped with a water condenser and a Teflon-coated magnetic stirring bar, 25.36 g of LiBr (292 mmol) was added. The whole system was flame-dried under vacuum and cooled to room temperature under argon. 100 ml of dry THF was added to the flask and after all the LiBr was dissolved, the solution was cooled to -15°C. Then the mixture was successively treated with 7.18 g of 1,2-cyclopentadione[2] (73.2 mmol) in 20 ml dry THF, 25.00 g of chloro(dimethyl)isopropylsilane (183 mmol) and 27.86g of 1,8-diazabicyclo[5.4.0]-undec-7-ene (183 mmol). The resulting heterogeneous mixture was stirred at -15°C for 2 h and then put into an oil bath preheated to 45°C. The reaction mixture was then allowed to react for 18 h. The volatiles were removed under vacuum and the product was extracted with 80 ml of dry pentane twice. The two pentane parts were combined and pentane was pumped away to give 21.35 g of brown oily liquid, which was purified by distillation (61-64°C, 0.024mbar) to afford 18.14 g of pure product (60.8 mmol, 83.3%). GC-MS: m/e=298 (M+). 1H NMR (250 MHz, CHLOROFORM-d δ ppm): 5.21 (t, J=2.08 Hz, 2 H, CpH) 2.68 (t, J=2.08 Hz, 2 H, CpH₂) 1.01 (s, 2 H, OSiMe₂(CHMe₂)) 1.00 (s, 12 H, OSi(CH₃)₂(i-Pr)) 0.18 (s, 12 H, OSiMe₂(CH(CH₃)₂)).

### Example 3b: Preparation of 5-trimethylsilyl-2,3-bis-(i-propyldimethyl-siloxy)-cyclopenta-1,3-diene (8)

To a 250-ml flame-dried two-necked flask equipped with a 60-ml addition funnel and a Teflon-coated magnetic stirring bar, 14.93 g of 2,3-bis-(i-Propyl-dimethyl-siloxy)-cyclopenta-1,3-diene (50.0 mmol) and 100 ml dry THF were added. The mixture was cooled to -78°C and 33.4 ml of t-BuLi (1.5 M in pentane) was added dropwisely. After completion of addition, the mixture was stirred at room temperature for 2 h and then cooled to 0°C. 5.56 g of trimethylchlorosilane (52.0 mmol) was added to the mixture in one portion and the mixture was stirred at room temperature for 2 h. The same workup as Example 2b gave 14.69 g of distilled (72-75°C, 0.028mbar) product (39.6 mmol, 79.2%). GC-MS: m/e=370 (M+). 1H NMR (250 MHz, CHLOROFORM-d δ ppm): 5.32 (d, J=1.71 Hz, 2 H, CpH) 2.63 (t, J=1.59Hz, 1 H, CpH-Si) 1.01 (s, 14 H, OSiMe₂(CH(CH₃)₂)), 0.17 (s, 12 H, OSi (CH₃)₂ (i-Pr)), -0.03 (s, 9 H, Si (CH₃)₃).

### Example 3c: Preparation of Bis-[1,2-(i-propyldimethylsiloxy)cyclopentadienyl]zirconium dichloride (9)

A flame-dried 100-ml Schlenk flask was charged with 2.56 g of ZrCl₄ (11.0 mmol), 50 ml of dry toluene and a magnetic stirring bar and was fitted with a rubber septum. 7.41 g of 5-trimethylsilyl-2,3-bis-i-Propyl-dimethylsiloxy-cyclopenta-1,3-diene (20.0 mmol) was added by syringe and the resultant heterogeneous mixture was stirred at room temperature for 24 h. The reaction mixture was filtered through a 3-cm plug of Celite and the filtrate was concentrated and cooled to -40°C. The target zirconocene precipitated as a slightly yellow microcrystalline powder. The solvent was removed by filtering on paper and the solid was vacuum-dried to afford 4.95 g of powder (65.4 mmol, 65.4% based on the ligand). 1H NMR (600 MHz, DICHLOROMETHANE-d2 δ ppm): 5.61 (t, J=4.15 Hz, 2 H) 5.50 (d, J=3.78 Hz, 4 H) 1.03 (s, 4 H, OSiMe₂CH(Me₂) ) 1.02 (s, 24 H, OSiMe₂CH(CH₃)₂) 0.22 (d, J=7.55 Hz, 24H, OSi(CH₃)₂(i-Pr)). 13C NMR (CD₂Cl₂, δ):136.33, 99.84, 97.54, 15.74, 14.01, -4.23, - 4.45. In the EIMS spectrum, parent ions of the composition C₃₀H₅₈Si₄O₄ZrCl₂⁺ were observed in the appropriate isotope ratios at m/e 754-763.

### Example 4a: Preparation of 2,3-bis-(t-butyl-dimethyl-siloxy)-cyclopenta-1,3-diene (10)

This compound was synthesized in a manner analogous to the procedure for 2,3-bis-trimethylsiloxy-cyclopenta-1,3-diene. 10.50 g of 2-(t-butyl-dimethyl-siloxy)-cyclopent-2-enone (49.44 mmol) was treated with 8.00 g of t-butyldimethylchlorosilane (73.6 mmol) in the presence of 17.37 g of LiBr (200.0 mmol) and 11.24 g of 1,8-diazabicyclo[5.4.0]-undec-7-ene (73.83 mmol) to afford 11.47g of brown residue, which was purified by distillation (69-72°C, 0.058mbar) to give 7.40 g of pure product (22.66 mmol 45.8%). GC-MS: m/e=326 (M+). 1H NMR (250 MHz, CHLOROFORM-d δ ppm): 5.19 (t, J=2.08 Hz, 2 H, CpH) 2.68 (t, J=2.08 Hz, 2 H, CpH₂) 0.96 (s, 18 H, OSiMe_{z}C (CH₃) 3) 0.19 (s, 12 H, OSi (CH₃) ₂ (t - Bu) ) .

### Example 4b: Preparation of 5-trimethylsilyl-2,3-bis-(t-butyl-dimethyl-siloxy)-cyclopenta-1,3-diene (11)

To a 100-ml flame-dried Schlenk flask, 5.70 g of 2,3-bis-(t-butyl-dimethyl-siloxy)-cyclopenta-1,3-diene (17.4 mmol) and 50 ml dry THF were added. The solution was cooled to -78°C and 11.70 ml of t-BuLi (1.5 M in pentane) was added dropwisely. After completion of addition, the mixture was stirred at room temperature for 2 h and cooled to 0°C. 2.00 g of trimethylchlorosilane (18.4 mmol) was added to the mixture in one portion and the mixture was stirred at room temperature for 2 h. The same workup and purification method with 5-trimethylsilyl-2,3-bis-trimethylsiloxy-cyclopenta-1,3-diene afforded 5.50 g of distilled (78-83°C, 0.035mbar) pure product (13.8 mmol, 79.3%). GC-MS: m/e=398 (M+) . 1H NMR (CDCl₃, δ): 5.29 (d, 2H, CpH); 2.62 (t, 1H, CpH-Si); 0.96 (s, 18H, OSiMe₂C (CH₃) ₃); 0 .24 (d, 12H, OSi(CH₃)₂(t-Bu)); 0.03 (s, 9H, Si (CH₃)₃).

### Example 4c: Preparation of Bis-[1,2-(t-butyldimethylsiloxy)cyclopentadienyl]zirconium dichloride (12)

A flame-dried 100-ml Schlenk flask was charged with 1.82 g of ZrCl₄ (7.81 mmol), 60 ml of dry toluene and a magnetic stirring bar and was fitted with a rubber septum. Then 5.18 g of 5-trimethylsilyl-2,3-bis-t-butyldimethylsiloxy-cyclopenta-1,3-diene (13.0 mmol) was added by syringe and the resultant heterogeneous mixture was stirred at room temperature for 20 h. The reaction mixture was filtered through a 3-cm plug of Celite and the volatiles were removed under reduced pressure to give 3.47 g of almost pure product (4.27 mmol, 65.6% based on the ligand). Further purification by recrystallisation from n-hexane afforded yellow microcrystalline powder. 1H NMR (600 MHz, DICHLOROMETHANE-d2 δ ppm): 5.46 (t, J=4.15 Hz, 2 H) 5.29 (d,J=4.16 Hz, 4 H) 0.79 (s, 36 H, OSiMe₂C(CH₃)₃) 0.02 (d, J=26.44 Hz, 24 H, OSi (CH₃)₂ (t-Bu)). 13C NMR (CD₂Cl₂, δ) : 136.41, 99.64, 97.48, 24.77, 17.39, -4.76, -5.40. In the EIMS spectrum, parent ions of the composition C₃₄H₆₆Si₄O₄ZrCl₂⁺ were observed in the appropriate isotope ratios at m/e 810-819.

The reactions in these examples are summarised in the scheme below.

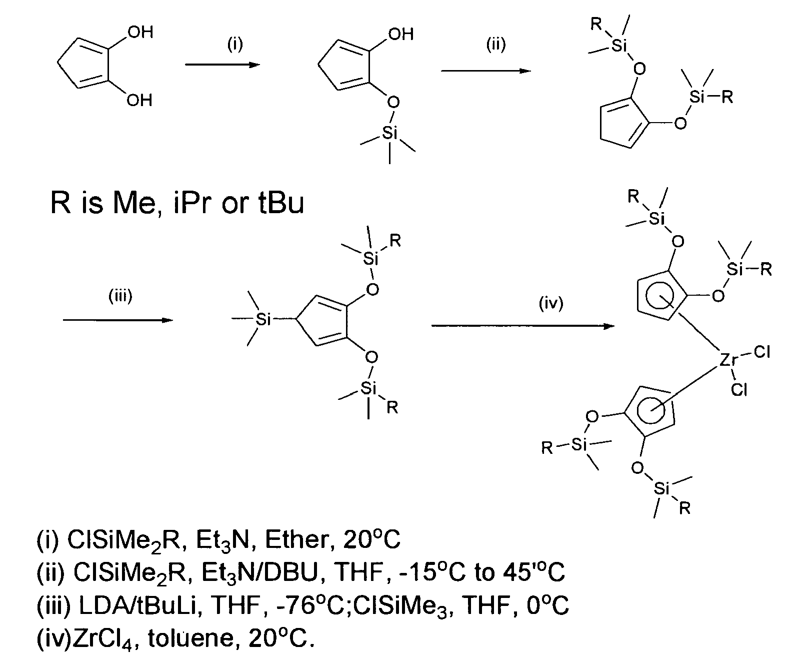

### Example 5: Alternative synthesis of bis-(1, 2-trimethylsiloxyl-cyclopentadienyl)dichloro-zirconium (4)

A solution of 1, 2-ditrimethylsiloxyl-5-trimethylsilyl-cyclopentadiene (6.28 g, 20.0 mmol) in 20 ml toluene is added in one portion to a solution of ZrCl₄ (2.33 g, 10.0 mmol) in 100 ml toluene at 40°C. The resulting mixture is allowed to cool to room temperature and stirred overnight. The volatiles are removed under reduced pressure and the left residue is extracted with 60 ml of hexane/CH₂Cl₂=1:1. The solution is concentrated and the product is purified by recrystallization.

### Example 6: Synthesis of ethylene-bridged ligand (5)

To a 250 ml flame-dried two-necked flask equipped with a water condenser, 5-trimethylsilanyl-2,3-bis-trimethylsilanyloxy-cyclopenta-1,3-diene (6.28 g, 20.0 mmol) and 60 ml dry THF were added. The solution was cooled to 0°C and then 10 ml lithium diisopropylamide (LDA) solution (2 M in pentane/THF) was added to this stirring solution at 0°C. The reaction mixture was refluxed for about 18 h. Then diisopropylamine formed during the reaction and THF were removed under reduced pressure. 80 ml THF was added to dissolve the residue and the solution was cooled to 0°C. To this stirring solution, 1,2-dibromoethane (1.88 g, 10.0 mmol) in 20 ml THF was added dropwise and then the resulting mixture was warmed to room temperature and stirred for 12 h. Volatiles were removed under reduced pressure and the residue was dissolved in 60 ml dry pentane. The resulting suspension was filtered and washed with two portions of 20 ml pentane. Pentane was removed under vacuum and the residue was purified by distillation or recrystallization.

### Example 7: Synthesis of ethylene-bis-(1,2-ditrimethylsiloxyl-cyclopentadienyl)dichlorozirconium (6)

A solution of ethylene-bridged ligand (6.55 g, 10.0 mmol) in 20 ml toluene is added in one portion to a solution of ZrCl₄ (2.33 g, 10.0 mmol) in 100 ml toluene at 40°C. The resulting mixture is allowed to cool to room temperature and stirred overnight. The volatiles are removed under reduced pressure and the left residue is extracted with 60 ml of hexane/CH₂Cl₂=1:1. The solution is concentrated and the product is purified by recrystallization.

### References

[1] T. Sasaki, Y. Ishibashi, M. Ohno, Tetrahedron Letters 23 (1982) 1693.
[2] R. M. Acheson, Journal of the Chemical Society, Abstracts (1956) 4232.

### Example 8: Polymerisations

Polymerisations conducted in examples 8 to 10 were carried out in a 2 L stainless steel autoclave reactor equipped with a paddle stirrer and a continuous supply of ethylene.

Ethylene used was grade 3.5 (AGA), iso-Butane 4.5 (Messer-Griesheim), 1-hexene 1.8 (AMOCO Corp.), hydrogen 5.0 (AGA), nitrogen 5.0 (AGA). In addition, all raw materials were passed through series of columns removing oxygen, water, carbon monoxide and carbon dioxide and other trace impurities. Comonomer was fed to the reactor simultaneously with the ethylene. MFR's of the produced polymers were measured according to the ISO-1133 method at 190°C under a load of 21.6 kg. Polymerization temperature was 80°C and ethylene pressure 10 bar unless otherwise noted. Methylalumoxane (MAO) 30 wt-% solution in toluene was purchased from Albemarle. The molecular weight averages and molecular weight distributions were determined using a Waters 150C SEC (size exclusion chromatography) instrument. A set of two mixed bed and one 10"7 Å TSK-Gel columns from TosoHaas was used. The analyses were performed in 1,2,4-trichlorobenzene (TCB) stabilised with BHT at 135°C with flow rate 0.7 ml/min. The columns were calibrated with NMWD polystyrene standards and BMWD polyethylenes

Copolymerisation of ethylene and 1-hexene was conducted as follows: 600 mL of pentane was added to the reactor at room temperature, followed by the addition of the catalyst from a catalyst feeding funnel with additional 600 mL pentane. The reactor was heated to +80°C, after which the polymerisation was started by adding 30 mL of 1-hexene in one batch using continuous feed of ethylene. Ethylene feed was then added into the autoclave to maintain the reactor pressure at the targeted value. The ethylene partial pressure was 10 bar and the total pressure 13.7 bar. Run time was 30 min. The operating procedure was the same in all examples 8 to 10.

The catalyst was prepared as follows: 1.0 mmol of the metallocene compound (4) prepared in Example 2c was mixed with 1000 mmol of MAO in pentane solution in the catalyst feeding funnel. The catalyst solution was then charged into the reactor as described above.

After the polymerisation, 2.2 g of polymer was recovered from the reactor. It had a weight average molecular weight of 919000 g/mol and a content of hexene units of 0.4% by weight.

The polymerisation and polymer analysis data is shown in the table below.

### Example 9

The procedure of Example 8 was repeated, except that the metallocene compound (12) produced in Example 4c was used.

After the polymerisation, 23.6 g of polymer was recovered from the reactor. It had a weight average molecular weight of 65500 g/mol and a content of hexene units of 3.0% by weight.

The polymerisation and polymer analysis data is shown in the table below.

### Example 10

The procedure of Example 8 was repeated, except that the metallocene compound (9) produced in Example 3c was used and that the amount of the metallocene compound was 0.5 mmol and the amount of MAO was 500 mmol.

After the polymerisation, 0.8 g of polymer was recovered from the reactor.

The polymerisation and polymer analysis data is shown in the table below.

| | Ex 8 | Ex 9 | Ex10 |
|---|---|---|---|
| Temperature (°C) | 80 | 80 | 80 |
| C₂ Pressure (bar) | 10 | 10 | 10 |
| Comonomer feed (mL) | 40 | 40 | 40 |
| Catalyst (µmol) | 1.0 | 1.0 | 0.50 |
| Cocatalyst type | MAO | MAO | MAO |
| [Al] : [M] | 1000 | 1000 | 1000 |
| Pentane (mL) | 1200 | 1200 | 1200 |
| Stirring rate (rpm) | 400 | 400 | 400 |
| Activity [kg(PE)/g(Zr)/h] | 24.30 | 262.92 | 25.44 |
| Yield (g) | 2.2 | 23.6 | 0.8 |
| MFR₂₁ | n.d. | 380 | n.d. |
| DSC: Melting point (°C) | 130.6 | 125.8 | n.d. |
| DSC: Crystallinity (%) | 49.7 | 59.9 | n.d. |
| GPC: M_{w} (g/mol) | 919000 | 65500 | n.d. |
| GPC: Polydispersity | 5.6 | 8.1 | n.d. |
| Comonom. Cont. (wt-%) | 0.4 | 3.0 | n.d. |
| trans-vinylene (wt-%) | 0.03 | 0.30 | n.d. |
| Vinyl (wt-%) | 0.47 | 0.95 | n.d. |
| Vinylidene (wt-%) | 0.57 | 0.22 | n.d. |

Ethylene pressure 10 bar, t=30 min, polymerisation temp. 80°C, n.d.=not determined, medium=1200 mL pentane, non supported catalyst.

The polymerisation activities varied from 24 to 263 kg(PE)/g(Zr)/h. The molecular weights (Mw) of the polymers obtained varied from 65,500 to 919,000 g/mol. The compound with OSiMe₃ substituents showed highest molecular weight capability and lowest comonomer reactivity of 0.4 wt-%. The compound with OSiMe₂tBU substituents had notably higher comonomer incorporation, 3.0 wt-%. Amount of vinyl and trans-vinylene groups formed was higher with the OSiMe₂tBu compound indicating higher tendency towards β-H transfer reactions and chain transfer to monomer.

## Claims

1. A metallocene procatalyst compound comprising a group 3 to 7 transition metal and a multisiloxy substituted cyclopentadienyl ligand or a multisiloxy substituted bicyclic cyclopentadienyl ligand with the proviso that if a siloxy group is present in the 6 membered ring of an indenyl ligand, then at least two siloxy substituents must be present on adjacent carbon atoms forming the bicyclic ring.

2. A procatalyst as claimed in claim 1 comprising a multisiloxy substituted cyclopentadienyl ligand of formula (I) 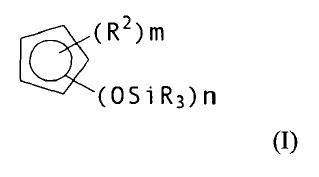 wherein each R, which may be the same or different, is a C₁₋₁₆ hydrocarbyl group;
each R², which may be the same or different, is a ring substituent which does not form a bond to a metal complexed by the cyclopentadienyl ring;
n is an integer from 2 to 5,
m is an integer from 0 to 3, the total of n and m not exceeding 5.

3. A procatalyst as claimed in claim 1 or 2 wherein the siloxy substituents are present on adjacent carbon atoms.

4. A procatalyst as claimed in claim 2 or 3 wherein n is 2 and m is 0 or 1.

5. A procatalyst as claimed in claim 1 comprising a multisiloxy substituted bicyclic cyclopentadienyl ligand of formula (II) 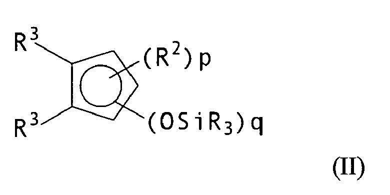 wherein R and R² are as hereinbefore defined; the two R³ groups taken together form a fused ring having 4 to 6 carbon atoms;
q is an integer from 2 to 7; and
p is an integer from 0 to 5; the total p+q not exceeding 7; with the proviso that if an OSiR₃ group is present in the 6 membered ring of an indenyl ligand, then at least two OSiR₃ groups must be present on adjacent carbon atoms.

6. A procatalyst of claim 5 wherein q is 2 and p is 0 or 1.

7. A procatalyst as claimed in claim 5 or 6 wherein the bicyclic cyclopentadienyl ligand is an indenyl ligand.

8. A procatalyst as claimed in any of claims 1 to 7 wherein said procatalyst comprises two multisiloxy substituted ligands.

9. A procatalyst as claimed in claim 8 wherein said multisiloxy substituted ligands are identical.

10. A procatalyst as claimed in claim 8 or 9 wherein said multisiloxy substituted ligands are bridged.

11. A procatalyst as claimed in claim 1 of formula (IIIa) or (IVa) 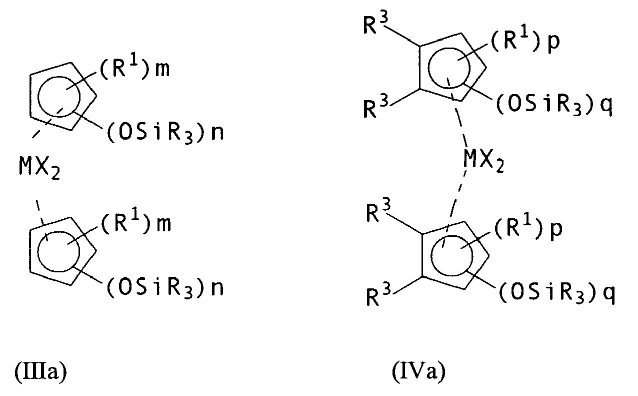 wherein the metal M is a group 3 to 7 transition metal; each X is a sigma ligand; R, R³, m, n, p and q are as hereinbefore defined and each R¹, which may be the same or different, is a ring substituent which does not form a bond to a metal complexed by the cyclopentadienyl ring or one R¹ group on each ring can be taken together to form a bridge; with the proviso that if an OSiR₃ group is present in the 6 membered ring of an indenyl ligand, then at least two OSiR₃ groups must be present on adjacent carbon atoms.

12. A procatalyst as claimed in claim 11 wherein X is chloride, amino, benzyl or trimethylsilyl.

13. A procatalyst as claimed in any preceding claims wherein said group 3 to 7 transition metal is Ti, Zr or Hf.

14. A procatalyst as claimed in claim 2 to 14 wherein R¹ or R² is triC₁₋₈-alkylsilyl.

15. A procatalyst as claimed in any one of claims 2 to 14 wherein OSiR₃ is trimethylsiloxy, dimethylisopropylsiloxy or tertbutyldimethylsiloxy.

16. An olefin polymerisation catalyst system comprising (i) a metallocene procatalyst as claimed in any one of claims 1 to 15 and (ii) a co-catalyst.

17. An olefin polymerisation catalyst system as claimed in claim 16 carried on a support.

18. A process for olefin polymerisation comprising polymerising an olefin in the presence of olefin polymerisation catalyst system as claimed in claim 16 or 17.

19. The use of an olefin polymerisation catalyst system as claimed in claim 16 to 17 in olefin polymerization

20. An olefin polymer produced by a polymerisation catalysed by a olefin polymerisation catalyst system as claimed in claim 16 or 17.

21. A process for the preparation of siloxy substituted metallocene procatalyst comprising reacting a compound of formula (VI) 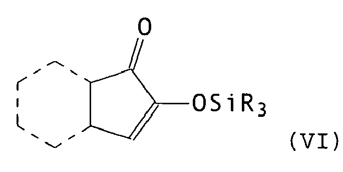 wherein R is as hereinbefore defined and the dotted lines represent the optional presence of a saturated 6- membered ring (i.e. to form a tetrahydroindenyl species);
with a compound of formula R₃SiZ, wherein R is as hereinbefore defined and Z represents a leaving group, in the presence of a base, to form a compound of formula (V) 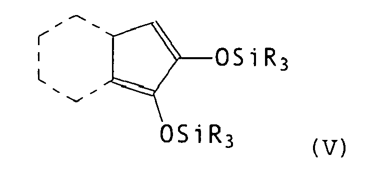 and reacting the compound of formula (V) with a metal chloride.

22. A process for the preparation of a multisiloxy substituted metallocene procatalyst comprising reacting a compound of formula (VIIIa/b/c) 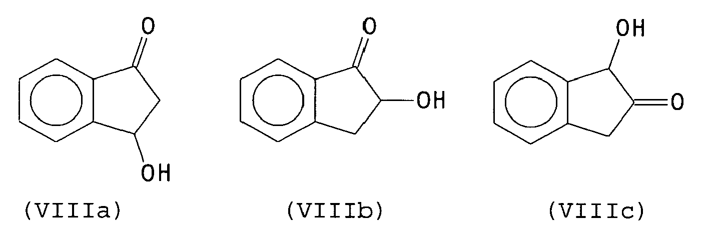 with a compound of formula R₃SiZ, wherein R is as hereinbefore defined and Z represents a leaving group, in the presence of a base to form a compound of formula (IX) 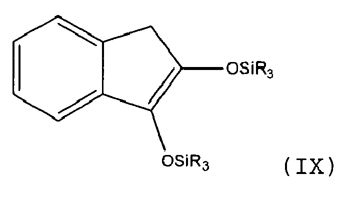 and reacting the compound of formula (IX) with a metal chloride.

23. A compound of formula (VII) 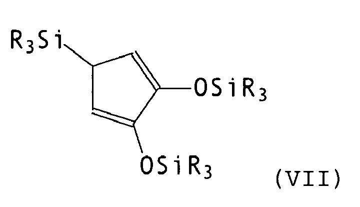 wherein R is as hereinbefore defined.
